# EUROPEAN PATENT APPLICATION

(11) **EP 4 672 697 A1**
(43) Date of publication of application: **31.12.2025**
(21) Application number: 25159119.4
(22) Date of filing: 20.02.2025
(51) Int. Cl.: H04L 41/0896, H04L 43/0817, H04L 47/00

(54) **TRAFFIC TRANSMISSION CONTROL METHOD, ELECTRONIC DEVICE, AND STORAGE MEDIUM**

(30) Priority: 27.06.2024 CN 202410852629
(71) Applicant: Beijing Volcano Engine Technology Co., Ltd., Beijing 100190 (CN)
(72) Inventor: WEN, Shubo, Beijing 100028 (CN); WANG, Zhihong, Beijing 100028 (CN); LI, Deguo, Beijing 100028 (CN); WEI, Zhaoyang, Beijing 100028 (CN)
(74) Representative: Isarpatent

(57) **Abstract**

The present disclosure relates to a traffic transmission control method, an electronic device, and a storage medium. The method includes: obtaining a central processing unit CPU consumption value consumed by each tenant traffic of a cloud network service transmitted via a virtual switch in a current statistical period, to obtain a CPU consumption value corresponding to each tenant; calculating a CPU consumption proportion among tenants based on the CPU consumption value and a CPU consumption value corresponding to each tenant accumulated in a historical statistical period; receiving outbound traffic of each tenant in a next statistical period of the current statistical period; and controlling the virtual switch to perform forwarding processing on the outbound traffic of each tenant in the next statistical period of the current statistical period based on the CPU consumption proportion among the tenants and a virtual switch forwarding performance proportion preconfigured for each tenant.

## Description

### CROSS-REFERENCE TO RELATED APPLICATION

This application claims the priority to and benefits of the Chinese Patent Application, No. 202410852629.2, which was filed on June 27, 2024. The aforementioned patent application is hereby incorporated by reference in its entirety.

### TECHNICAL FIELD

The present disclosure relates to a traffic transmission control method, an electronic device, and a storage medium.

### BACKGROUND

With the development of the cloud computing industry, the transmission performance of a cloud network directly affects the performance of services on the cloud. The cloud network is a virtual network built on a physical network, so that all users can customize their own network topologies and enjoy rich network functions without perceiving the physical network.

A cloud network is generally configured with a forwarding software, which is also called a virtual switch. The forwarding software is responsible for implementing data forwarding between the physical network and the virtual network for users. A typical application scenario is a multi-tenant sharing scenario. However, there is a forwarding performance isolation problem in the multi-tenant sharing scenario.

### SUMMARY

The Summary is provided to introduce concepts briefly, and these concepts will be described in detail in the following Detailed Description. The Summary is not intended to identify key features or essential features of the claimed technical solutions, nor is it intended to be used to limit the scope of the claimed technical solutions.

In a first aspect, the present disclosure provides a traffic transmission control method based on a cloud network, including:
obtaining a central processing unit (CPU) consumption value consumed by each tenant traffic of a cloud network service transmitted via a virtual switch in a current statistical period, to obtain a CPU consumption value corresponding to each tenant in the current statistical period, and calculating a CPU consumption proportion among tenants in the current statistical period based on the CPU consumption value corresponding to each tenant in the current statistical period and a CPU consumption value corresponding to each tenant accumulated in a historical statistical period; and
receiving outbound traffic of each tenant in a next statistical period of the current statistical period, and controlling the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion.

In a second aspect, the present disclosure provides a traffic transmission control apparatus based on a cloud network, including:
an acquisition module, configured to obtain a central processing unit (CPU) consumption value consumed by each tenant traffic of a cloud network service transmitted via a virtual switch in a current statistical period, to obtain a CPU consumption value corresponding to each tenant in the current statistical period, and calculate a CPU consumption proportion among tenants in the current statistical period based on the CPU consumption value corresponding to each tenant in the current statistical period and a CPU consumption value corresponding to each tenant accumulated in a historical statistical period; and
a control module, configured to receive outbound traffic of each tenant in a next statistical period of the current statistical period, and control the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion.

In a third aspect, the present disclosure provides a computer-readable medium storing computer program thereon, and when the computer program is executed by a processing apparatus, the steps of the method according to any one of the first aspect are implemented.

In a fourth aspect, the present disclosure provides an electronic device, including:
a storage apparatus storing a computer program thereon; and
a processing apparatus, configured to execute the computer program in the storage apparatus to implement the steps of the method according to any one of the first aspect.

In a fifth aspect, the present disclosure provides a computer program product, including a computer program, and when the computer program is executed by a processor, the steps of the method according to any one of the first aspect are implemented.

Other features and advantages of the present disclosure will be described in detail in the following Detailed Description.

### BRIEF DESCRIPTION OF DRAWINGS

The above and other features, advantages, and aspects of embodiments of the present disclosure will become more apparent when taken in conjunction with the drawings and with reference to the following detailed description. Throughout the drawings, the same or similar reference numbers refer to the same or similar elements. It should be understood that the drawings are schematical and that parts and elements are not necessarily drawn to scale. In the drawings:
Fig. 1 is a schematic diagram of traffic transmission control in the related art.
Fig. 2 is a flowchart of a traffic transmission control method based on a cloud network according to an embodiment of the present disclosure.
Fig. 3 is a schematic diagram of a scheduling result of the traffic transmission control method based on a cloud network according to an embodiment of the present disclosure.
Fig. 4 is a schematic diagram of a scheduling result of a traffic transmission control method according to the related art.
Fig. 5 is another flowchart of the traffic transmission control method based on a cloud network according to an embodiment of the present disclosure.
Fig. 6 is a schematic diagram of i solation effect of a forwarding performance of the traffic transmission control method based on a cloud network according to an embodiment of the present disclosure.
Fig. 7 is another schematic diagram of isolation effect of a forwarding performance of the traffic transmission control method based on a cloud network according to an embodiment of the present disclosure.
Fig. 8 is a schematic block diagram of a traffic transmission control apparatus based on a cloud network according to an embodiment of the present disclosure.
Fig. 9 shows a schematic structural diagram of an electronic device suitable for implementing an embodiment of the present disclosure.

### DETAILED DESCRIPTION

Embodiments of the present disclosure will be described in more detail below with reference to the drawings. Although some embodiments of the present disclosure are shown in the drawings, it should be understood that the present disclosure can be implemented in various forms and should not be construed as being limited to the embodiments set forth herein. On the contrary, these embodiments are provided for a more thorough and complete understanding of the present disclosure. It should be understood that the drawings and embodiments of the present disclosure are only for exemplary purposes and are not intended to limit the scope of protection of the present disclosure.

It should be understood that various steps described in the method implementations of the present disclosure can be performed in different orders and/or in parallel. In addition, the method implementations can include additional steps and/or omit performing the illustrated steps. The scope of the present disclosure is not limited in this respect.

As used herein, the term "include " and variations thereof are open-ended inclusions, that is, "include ". The term "based on" is "at least partially based on". The term "one embodiment" means "at least one embodiment". The term "another embodiment" means "at least one additional embodiment". The term "some embodiments" means "at least some embodiments". Relevant definitions of other terms will be given in the following description.

It should be noted that the concepts of "first" and "second" mentioned in the present disclosure are only used to distinguish between different apparatuses, modules, or units, and are not used to limit the order or interdependence of the functions performed by these apparatuses, modules, or units.

It should be noted that the modifications of "one" and "a plurality of" mentioned in the present disclosure are schematic and non-restrictive, and those skilled in the art should understand that unless the context clearly indicates otherwise, they should be understood as "one or more".

The names of messages or information exchanged between a plurality of apparatuses in the implementations of the present disclosure are only used for illustrative purposes and are not intended to limit the scope of these messages or information.

It should be understood that before the technical solutions disclosed in the embodiments of the present disclosure are used, the user should be informed of the type, use scope, use scene, etc. of the personal information involved in the present disclosure and the user's authorization should be obtained through an appropriate manner in accordance with relevant laws and regulations.

For example, in response to receiving an active request from the user, prompt information is sent to the user to explicitly prompt the user that his/her requested operation will require the acquisition and use of personal information of the user. Thus, the user can autonomously select whether to provide personal information to software or hardware such as an electronic device, an application, a server, or a storage medium that performs the operation of the technical solution of the present disclosure according to the prompt information.

As an optional but non-restrictive implementation, the manner of sending the prompt information to the user in response to receiving the active request from the user may be, for example, a pop-up window, and the prompt information may be presented in the pop-up window in a text form. In addition, the pop-up window may also carry a selection control for the user to select "Consent" or "Disagree" to provide personal information to the electronic device.

It should be understood that the above notification and acquisition of user authorization process is only schematic and does not constitute a limitation on the implementations of the present disclosure. Other manners that meet relevant laws and regulations can also be applied to the implementations of the present disclosure.

At the same time, it should be understood that the data involved in the technical solution (including but not limited to the data itself, the acquisition or use of the data) should comply with the requirements of corresponding laws, regulations, and related provisions.

The cloud network is a virtual network built on the physical network, so that all users can customize their own network topologies and enjoy rich network functions without perceiving the physical network. In order to distinguish traffic from different users on a same physical network and provide network functions such as routing and security groups, a cloud network generally runs a forwarding software, also known as a virtual switch (vSwitch), on a computing node. The forwarding software is mainly responsible for receiving packets from a user's computing instance, encapsulating a tunnel on an outer layer of an original packet after various functional processing, and sending the packet to the physical network, as well as receiving packets with an outer encapsulation from the physical network, and sending a decapsulated packet to a specified computing instance after various functional processing, where the computing instance is, for example, a virtual machine VM or a container.

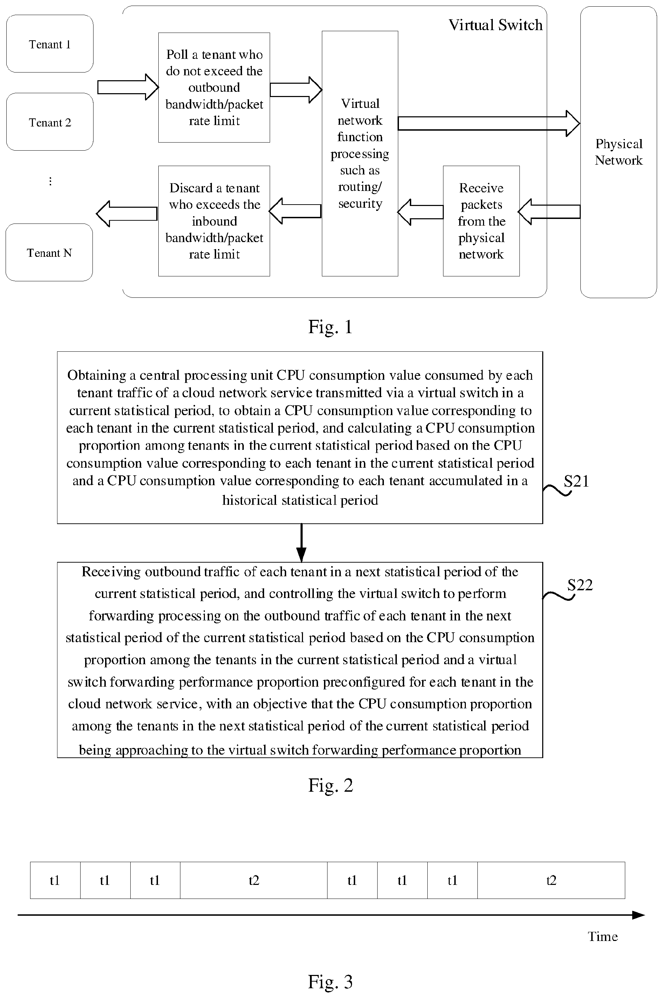

Limited by a number of CPUs reserved for the vSwitch to run, the forwarding capability of the vSwitch is limited. There will be a large number of computing instances on the same computing node, and different computing instances have different expected network performance due to their different specifications. Therefore, a typical scenario of multiple tenants sharing limited resource is actually generated here, where the tenant refers to a computing instance, and the limited resource refers to the forwarding capability of the vSwitch. Generally, the vSwitch implements the isolation of the forwarding performance for each tenant by limiting the bandwidth and packet rate of each tenant. The overall process is as follows (as shown in Fig. 1). For outbound traffic of a tenant (that is, traffic sent from the tenant to a physical network), the vSwitch will poll and receive packets from tenants that have not reached the bandwidth and packet rate limits, and then send the packets to the physical network after various virtual network functions processing. That is to say, if the sending bandwidth of tenant 1 exceeds its own limit, packets will not be received from tenant 1 for a short time, so that the bandwidth of tenant 1 is prevented from being too large and squeezing the bandwidth of other tenants. For inbound traffic of a tenant (that is, traffic received by the tenant from the physical network), since the tenant to which a packet belongs cannot be distinguished on the physical network, the vSwitch needs to uniformly receive packets from the physical network, and then it is necessary to perform various virtual network functions processing to determine the tenant to which the packet belongs. Then, the vSwitch can determine whether the bandwidth and packet rate limits of the tenant are exceeded, and if so, the packet needs to be dropped. This method ensures that the inbound bandwidth can be controlled within a certain range and avoids squeezing the bandwidth of other tenants.

However, in fact, the bandwidth and the packet rate are only two dimensions in the traffic model, which cannot completely describe the consumption of the forwarding performance of the vSwitch. For example, since the vSwitch needs to implement various functions such as stateful security filtering, the forwarding performance of the vSwitch when processing a new connection will be significantly lower than the forwarding performance when processing a non-new connection. That is, for two tenants with exactly the same specifications, bandwidth, and packet rate, the consumption of the forwarding performance of the vSwitch may also have a significant difference due to a difference in the new connection rate. Statistically, in some typical scenarios, this difference may reach 5-10 times. That is, assuming that there are two tenants with exactly the same specifications on the vSwitch, it is expected that they should equally share the forwarding performance of the vSwitch when they are busy. However, in fact, tenant 1 may have more new traffic in its traffic model, resulting in tenant 2 actually only getting one-tenth of the forwarding performance of the vSwitch. This will make tenant 2 obviously perceive the degradation of the virtual network performance, and at the same time, it is also obviously unfair for tenant 2.

The most important reason for the failure of the forwarding performance isolation solution based on bandwidth and packet rate limiting is that the vSwitch is a software package processing solution, and also supports a large number of complex virtual network functions, which result in the difference in the forwarding performance of the vSwitch under different traffic models. At this time, it is meaningless to ensure that the bandwidth or packet rate of each tenant for sending and receiving does not exceed its own limits. A single tenant can even completely exhaust the forwarding performance of the vSwitch with a traffic model far below its own limit, making the vSwitch almost unable to process any traffic from other tenants. Fundamentally, the consumption level of the shared resource by a tenant cannot be simply assessed by the bandwidth and the packet rate. However, if more traffic model description angles are further introduced, such as the new connection rate, the packet size distribution, the proportion of fragmented packets, etc., the complexity of the model will rise sharply, and incorrect modeling may even lead to further deterioration of the problem.

Therefore, in view of the great difference in traffic models of different tenants, and the different consumption of the forwarding capability of the vSwitch by different traffic models, there is an urgent need for a unified traffic transmission control scheme to ensure the forwarding fairness and isolation of different tenants, for example, the forwarding fairness and isolation when traffic models are greatly different, and reduce the impact of traffic behaviors of a certain tenant on the network performance of other tenants.

Fig. 2 is a flowchart of a traffic transmission control method based on a cloud network according to an embodiment of the present disclosure. The traffic transmission control method based on a cloud network can be applied to various traffic forwarding scenarios, such as a traffic forwarding scenario through a vSwitch in a cloud network. As shown in Fig. 2, the traffic transmission control method based on a cloud network may include the following steps S21 and S22.

In step S21, obtaining a central processing unit CPU consumption value consumed by each tenant traffic of a cloud network service transmitted via a virtual switch in a current statistical period, to obtain a CPU consumption value corresponding to each tenant in the current statistical period, and calculating a CPU consumption proportion among tenants in the current statistical period based on the CPU consumption value corresponding to each tenant in the current statistical period and a CPU consumption value corresponding to each tenant accumulated in a historical statistical period.

Taking the vSwitch in the cloud network as an example, the traffic forwarding process of the vSwitch is typically CPU-intensive. Therefore, it is only necessary to use the CPU consumption proportion among the tenants in the current statistical period when the vSwitch forwards the traffic (for example, packets) of the tenants, to assess the consumption of the forwarding performance of the vSwitch by each tenant. From another perspective, the problem can be further abstracted as multiple tenants actually sharing the CPU performance of forwarding of the vSwitch. As long as the fairness of the CPU consumption proportion of the vSwitch for forwarding the traffic of each tenant is ensured, the fairness and isolation of network performance among the tenants can be ensured.

In some embodiments, the CPU consumption value may include a CPU resource consumption or a CPU time consumption. For example, taking the tenants including tenant 1 and tenant 2 as an example, the sum of the CPU time consumption corresponding to tenant 1 in the current statistical period and the CPU time consumption corresponding to tenant 1 accumulated in the historical statistical period may be calculated to obtain the latest total CPU time consumption corresponding to tenant 1. The sum of the CPU time consumption corresponding to tenant 2 in the current statistical period and the CPU time consumption corresponding to tenant 2 accumulated in the historical statistical period may be calculated to obtain the latest total CPU time consumption corresponding to tenant 2. Then, the CPU consumption proportion between tenant 1 and tenant 2 may be obtained according to the latest total CPU time consumption corresponding to tenant 1 and tenant 2.

In step S22, receiving outbound traffic of each tenant in a next statistical period of the current statistical period, and controlling the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion.

By adopting the above technical solutions, a central processing unit (CPU) consumption value consumed by each tenant traffic of a cloud network service transmitted via a virtual switch in a current statistical period can be obtained, to obtain a CPU consumption value corresponding to each tenant in the current statistical period. A CPU consumption proportion among tenants in the current statistical period is calculated based on the CPU consumption value corresponding to each tenant in the current statistical period and a CPU consumption value corresponding to each tenant accumulated in a historical statistical period. Outbound traffic of each tenant is received in a next statistical period of the current statistical period. The virtual switch is controlled to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion. In this way, the consumption of the forwarding performance of the virtual switch by each tenant can be assessed with the aid of the CPU consumption proportion among the tenants and the preconfigured virtual switch forwarding performance proportion, so that the fairness and isolation of network performance (for example, forwarding performance) among the tenants are ensured.

In some embodiments, receiving the outbound traffic of each tenant in the next statistical period of the current statistical period, and controlling the virtual switch to perform forwarding processing on the outbound traffic of each tenant in the next statistical period of the current statistical period based on the CPU consumption proportion among the tenants in the current statistical period and the virtual switch forwarding performance proportion preconfigured for each tenant in the cloud network service, with the objective that the CPU consumption proportion among the tenants in the next statistical period of the current statistical period being approaching to the virtual switch forwarding performance proportion in step S22 may be implemented in the following manners.

Firstly, a tenant with a CPU consumption proportion lower than the virtual switch forwarding performance proportion is selected as a target tenant according to the CPU consumption proportion among the tenants in the current statistical period and the virtual switch forwarding performance proportion preconfigured for each tenant in the cloud network service. For example, a tenant with the lowest CPU consumption proportion lower than the virtual switch forwarding performance proportion may be selected as the target tenant according to the CPU consumption proportion among the tenants in the current statistical period and the virtual switch forwarding performance proportion preconfigured for each tenant in the cloud network service.

Then, the virtual switch is controlled to forward only the outbound traffic of the target tenant in the next statistical period of the current statistical period, so that the CPU consumption proportion among the tenants in the next statistical period of the current statistical period being approaching to the virtual switch forwarding performance proportion.

The following takes an example of the CPU consumption value being a CPU time consumption.

It is assumed that the tenants of the vSwitch include tenant 1 and tenant 2, and the preconfigured virtual switch forwarding performance proportion allocated to tenant 1 and tenant 2 is 1:1. It is assumed that both tenant 1 and tenant 2 have outbound traffic to be forwarded in the next statistical period of the current statistical period. If the sum of the CPU time consumption corresponding to tenant 1 in the current statistical period and the CPU time consumption corresponding to tenant 1 accumulated in the historical statistical period (that is, the total CPU time consumption) is 1,000, and the sum of the CPU time consumption corresponding to tenant 2 in the current statistical period and the CPU time consumption corresponding to tenant 2 accumulated in the historical statistical period is 3,000, then in the next statistical period of the current statistical period, the outbound traffic of tenant 1 will be selected to be forwarded, while the outbound traffic of tenant 2 will continue to wait in a traffic queue of tenant 2 (that is, each tenant has its own traffic queue). The reason for this selection is that the preconfigured virtual switch forwarding performance proportion between tenant 1 and tenant 2 is 1:1, and the CPU consumption proportion between tenant 1 and tenant 2 can be determined to be 1:3 according to the total CPU time consumption corresponding to tenant 1 and tenant 2, that is, the CPU consumption proportion corresponding to tenant 1 is significantly lower than the virtual switch forwarding performance proportion of tenant 1. After the outbound traffic of tenant 1 is forwarded in the next statistical period of the current statistical period, the CPU consumption proportion among the tenants will continue to be calculated. Assuming that the CPU time consumption of tenant 1 in the next statistical period of the current statistical period is 1,000, the CPU time consumption of tenant 1 in the next statistical period of the current statistical period will be added to the total CPU time consumption corresponding to tenant 1, that is, the total CPU time consumption corresponding to tenant 1 and tenant 2 will be 2,000 and 3,000 respectively. Then, it can be known from the CPU consumption proportion corresponding to tenant 1 and tenant 2 and the preconfigured virtual switch forwarding performance proportion that the traffic of tenant 1 will continue to be forwarded next time.

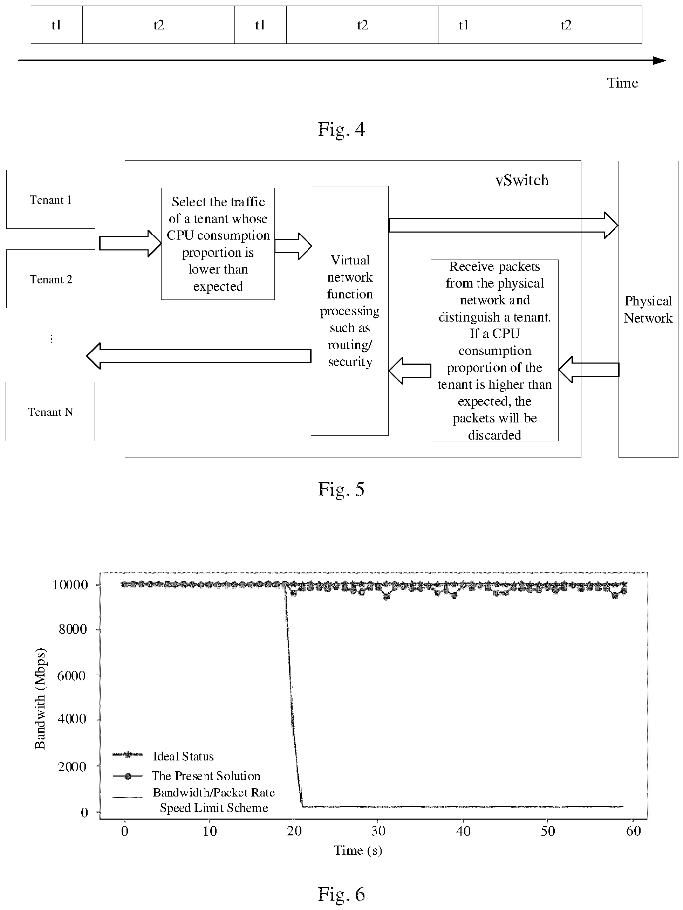

A simple scenario is envisioned. If the CPU time consumption corresponding to each traffic forwarding of tenant 1 is 1,000, and the CPU time consumption corresponding to each traffic forwarding of tenant 2 is 3,000, the scheduling result of the traffic transmission control method based on a cloud network according to the present disclosure is shown in Fig. 3, while Fig. 4 is a schematic diagram of the scheduling result of the traffic transmission control method according to the related art. In Fig. 3 and Fig. 4, t1 represents forwarding the traffic of tenant 1, and t2 represents forwarding the traffic of tenant 2. It can be seen from Fig. 3 and Fig. 4 that the traffic transmission control method based on a cloud network according to the embodiments of the present disclosure will forward the traffic of tenant 1 three times, and then forward the traffic of tenant 2 once, while the traffic transmission control method in the related art will poll tenant 1 and tenant 2 one by one. Obviously, the traffic transmission control manner according to the embodiments of the present disclosure is more fair to tenant 1 and tenant 2, and can better achieve the isolation of tenant 1 and tenant 2, without causing the phenomenon that tenant 2 squeezes the forwarding performance of tenant 1.

In some embodiments, the traffic transmission control method based on a cloud network according to the embodiments of the present disclosure may further include: in response to a CPU consumption value corresponding to a tenant in the current statistical period being less than a preconfigured lowest CPU consumption value, updating the lowest CPU consumption value to be equal to the CPU consumption value corresponding to the tenant.

Still taking the previous example as an example, tenant 1 is determined as the target tenant in the current statistical period, but tenant 1 does not have any traffic to be forwarded in the current statistical period. Then, the actual CPU consumption value corresponding to tenant 1 in the current statistical period will be very low, assuming that it is only 20. In this case, the CPU consumption value corresponding to tenant 1 in the current statistical period will be changed to the preconfigured lowest CPU consumption value, for example, 500. The additional preconfigured lowest CPU consumption value here actually gives the forwarding performance corresponding to tenant 1 to a tenant who has traffic to be forwarded. For example, if tenant 2 continues to have traffic to be forwarded, while tenant 1 continues to have no traffic to be forwarded, by changing the CPU consumption value corresponding to each traffic forwarding of tenant 1 to the preconfigured lowest CPU consumption value, it can be ensured that tenant 2 can fully utilize most of the CPU resources.

By adopting the above technical solutions, on the one hand, it is ensured that the forwarding performance among the tenants is isolated according to the preconfigured virtual switch forwarding performance proportion when the tenants are busy. On the other hand, by setting the preconfigured lowest CPU consumption value for each traffic forwarding, the forwarding performance of a tenant whose CPU consumption value is less than the preconfigured lowest CPU consumption value can be fully utilized for each traffic forwarding, so that the utilization of shared resources will not be significantly reduced while better isolation among the tenants is obtained, and the overall forwarding performance is fully utilized. In some embodiments, the traffic transmission control method based on a cloud network according to the embodiments of the present disclosure may further include: when receiving inbound traffic via the virtual switch, identifying a home tenant, and determining whether a CPU consumption proportion of a latest statistical period corresponding to the home tenant is higher than a virtual switch forwarding performance proportion preconfigured for the home tenant; when the CPU consumption proportion of the latest statistical period is higher than the virtual switch forwarding performance proportion, directly discarding the inbound traffic of the home tenant; and when the CPU consumption proportion of the latest statistical period is not higher than the virtual switch forwarding performance proportion, forwarding the inbound traffic of the home tenant through the virtual switch.

That is, from the inbound direction of the tenant traffic, the traffic transmission control method based on a cloud network according to the embodiments of the present disclosure will distinguish the tenant to which the packet belongs as soon as possible after receiving the packet from the physical network, for example, distinguish the tenant to which the packet belongs before performing virtual network functions such as routing/security, and then determine whether the CPU consumption proportion of the tenant to which the packet belongs is already higher than the preconfigured virtual switch forwarding performance proportion allocated to the tenant. If so, the inbound traffic of the tenant to which the packet belongs is directly discarded, and no further processing is performed.

There are two considerations for adopting this processing method here. One is that the characteristics and capabilities of physical network cards are different, and virtual switches such as the vSwitch need to be compatible with various physical network cards, so it is chosen to implement software without relying on hardware capabilities. The second is to choose to directly drop packets for performance considerations, instead of putting the inbound traffic into a queue with a tenant granularity to wait for subsequent forwarding. This is mainly because this software queue has a great impact on the cache, resulting in a significant loss in the forwarding performance of virtual switches such as the vSwitch.

By distinguishing the tenant to which the packet belongs as soon as possible before performing virtual network functions such as routing/security and immediately dropping the packet when the CPU consumption proportion corresponding to the tenant to which the packet belongs is higher than the preconfigured virtual switch forwarding performance proportion allocated to the tenant, the traffic transmission control method based on a cloud network according to the embodiments of the present disclosure realizes earlier packet loss compared with a conventional manner, so that the subsequent processing time of the packet can be saved for traffic processing of other tenants. In addition, this manner of packet loss according to the CPU consumption proportion can also accurately determine the tenant whose packets should be dropped without accidentally injuring other tenants. For example, it is assumed that there are tenant 1 and tenant 2 simultaneously receiving a large amount of traffic. In a conventional scheme, packets will not be actively dropped until the traffic of one of the tenants exceeds the bandwidth or packet rate limit. However, in fact, the traffic of tenant 1 may have a large number of new connections, resulting in a significantly higher consumption of the forwarding performance of the vSwitch or other virtual switches than that of tenant 2, which will cause the bandwidth of tenant 2 to be severely squeezed. With the traffic transmission control method based on a cloud network according to the embodiments of the present disclosure, after receiving the packet from the physical network, it will be found that the CPU consumption proportion corresponding to tenant 1 is already higher than expected, and the traffic of tenant 1 will be actively dropped immediately, so as to save CPU time to process more traffic of tenant 2, and thus the traffic forwarding of tenant 2 can be prevented from being severely affected.

In some embodiments, the obtaining the central processing unit (CPU) consumption value consumed by each tenant traffic of the cloud network service transmitted via the virtual switch in the current statistical period in step S21 may include: obtaining the CPU consumption value consumed by the outbound traffic of each tenant of the cloud network service transmitted via the virtual switch in the current statistical period as outbound CPU consumption value, and obtaining the CPU consumption value consumed by the inbound traffic of each tenant of the cloud network service transmitted via the virtual switch in the current statistical period as an inbound CPU consumption value; and calculating a sum of the outbound CPU consumption value and the inbound CPU consumption value corresponding to each tenant in the current statistical period respectively as the CPU consumption value corresponding to each tenant in the current statistical period.

That is, the CPU consumption value corresponding to each tenant is actually the sum of the outbound CPU consumption value and the inbound CPU consumption value of the tenant. That is to say, the CPU consumption of the outbound traffic will also be fed back to the inbound traffic, and vice versa. In this way, the outbound traffic and the inbound traffic can be scheduled in a unified manner. Regardless of any complex traffic scenario, the CPU consumption proportion among the tenants can be maintained near an expected value (that is, the preconfigured virtual switch forwarding performance proportion), so that the fairness and isolation of network performance (for example, forwarding performance) among the tenants are ensured.

Fig. 5 is another flowchart of a traffic transmission control method based on a cloud network according to an embodiment of the present disclosure. Fig. 5 is illustrated by taking the vSwitch as an example, but those skilled in the art should understand that the traffic transmission control process in Fig. 5 is applicable to any virtual switch, not just limited to the vSwitch.

As shown in Fig. 5, in the outbound traffic direction of the tenant, the traffic of the tenant with the lowest CPU consumption proportion lower than an expected proportion (that is, the preconfigured virtual switch forwarding performance proportion) is selected, and the specific implementation has been described in detail above, which will not be repeated here. Then, the selected traffic is processed by virtual network functions such as routing/security, and forwarded to the physical network after the processing.

In the inbound traffic direction of the tenant, after receiving the packet from the physical network, the tenant to which the packet belongs is distinguished according to the routing information in the received packet. Then, it is determined whether the CPU consumption proportion of the tenant to which the packet belongs is higher than the expected proportion (that is, the preconfigured virtual switch forwarding performance proportion). If it is higher than the expected proportion, the packet is immediately dropped. If it is lower than the expected proportion, the traffic of the tenant with the lowest CPU consumption proportion lower than the expected proportion (that is, the preconfigured virtual switch forwarding performance proportion) is selected, and the selected traffic is processed by virtual network functions such as routing/security, and then the processed traffic is forwarded to the corresponding tenant.

By adopting the above technical solutions, on the one hand, the consumption of the forwarding performance of the virtual switch by each tenant can be assessed with the aid of the CPU consumption proportion among the tenants and the preconfigured virtual switch forwarding performance proportion, so that the fairness and isolation of network performance (for example, forwarding performance) among the tenants are ensured. On the other hand, in the inbound traffic direction, the tenant to which the packet belongs is distinguished as soon as possible before performing the virtual network functions such as routing/security, and the packet is immediately dropped when the CPU consumption proportion of the tenant to which the packet belongs is higher than the preconfigured virtual switch forwarding performance proportion allocated to the tenant, thereby realizing earlier packet loss and saving the subsequent processing time of the packet for traffic processing of other tenants.

Fig. 6 is a schematic diagram of a forwarding performance isolation effect of the traffic transmission control method based on a cloud network according to an embodiment of the present disclosure.

The effect schematic diagram of Fig. 6 is for the following scenario: there are two tenants on a same vSwitch, which are t1 and t2, respectively, where there are several Transmission Control Protocol TCP flows with a total of 10 Gbps between t2 and tenant t3 on another vSwitch, and tenant t1 continues to receive a large number of User Datagram Protocol UDP fragments starting from 20s. The isolation of the forwarding performance with tenant t2 is verified by observing the bandwidth of the TCP flow on tenant t2.

It can be seen from Fig. 6 that under the conventional bandwidth/packet rate-based limiting scheme, when tenant t1 starts to continuously receive a large number of UDP fragments, the bandwidth of tenant t2 is severely damaged, from 10 Gbps to about 200 Mbps, which is almost unavailable. However, the traffic transmission control scheme according to the embodiments of the present disclosure can keep the bandwidth of tenant t2 at a level very close to 10 Gbps, which is very close to the ideal state.

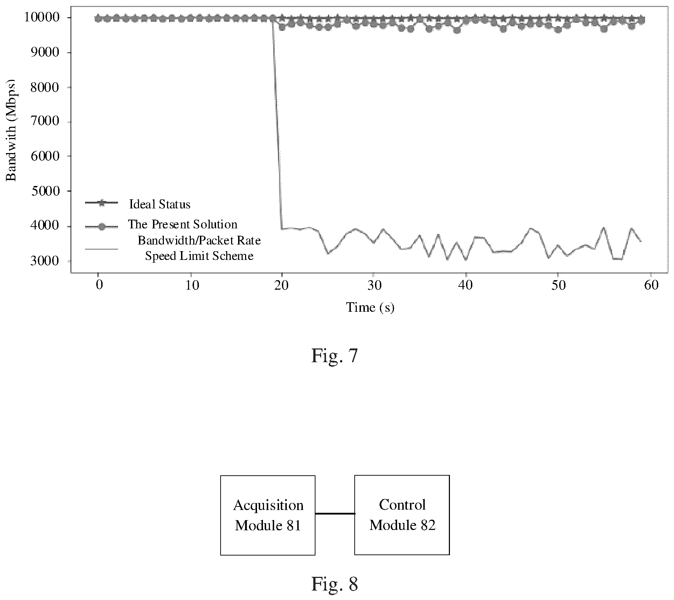

Fig. 7 is another schematic diagram of a forwarding performance isolation effect of the traffic transmission control method based on a cloud network according to an embodiment of the present disclosure.

The effect schematic diagram of Fig. 7 is for the following scenario: there are two tenants on a same vSwitch, which are t1 and t2, respectively, where there are several TCP flows with a total of 10 Gbps between tenant t2 and tenant t3 on another vSwitch, and tenant t1 starts to send a large number of new connections starting from 20s. The isolation of the forwarding performance between tenant t1 and tenant t2 is verified by observing the bandwidth of the TCP flow on tenant t2.

It can be seen from Fig. 7 that under the conventional bandwidth/packet rate-based limiting scheme, when tenant t1 starts to send a large number of new connections, the bandwidth of tenant t2 is significantly damaged, from 10 Gbps to about 3 Gbps, and the bandwidth jitters severely. However, the traffic transmission control scheme according to the present disclosure can keep the bandwidth of tenant t2 at a level close to 10 Gbps more smoothly, which is very close to the ideal state.

Fig. 8 is a schematic block diagram of a traffic transmission control apparatus based on a cloud network according to an embodiment of the present disclosure. The traffic transmission control apparatus based on a cloud network can be applied to various traffic forwarding scenarios, such as a traffic forwarding scenario through a vSwitch in a cloud network. As shown in Fig. 8, the traffic transmission control apparatus based on a cloud network according to the embodiments of the present disclosure may include: an acquisition module 81, configured to obtain a central processing unit (CPU) consumption value consumed by each tenant traffic of a cloud network service transmitted via a virtual switch in a current statistical period, to obtain a CPU consumption value corresponding to each tenant in the current statistical period, and calculate a CPU consumption proportion among tenants in the current statistical period based on the CPU consumption value corresponding to each tenant in the current statistical period and a CPU consumption value corresponding to each tenant accumulated in a historical statistical period; and a control module 82, configured to receive outbound traffic of each tenant in a next statistical period of the current statistical period, and control the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion.

By adopting the above technical solutions, a central processing unit (CPU) consumption value consumed by each tenant traffic of a cloud network service transmitted via a virtual switch in a current statistical period can be obtained, to obtain a CPU consumption value corresponding to each tenant in the current statistical period. A CPU consumption proportion among tenants in the current statistical period is calculated based on the CPU consumption value corresponding to each tenant in the current statistical period and a CPU consumption value corresponding to each tenant accumulated in a historical statistical period. Outbound traffic of each tenant is received in a next statistical period of the current statistical period. The virtual switch is controlled to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion. In this way, the consumption of the forwarding performance of the virtual switch by each tenant can be assessed with the aid of the CPU consumption proportion among the tenants and the preconfigured virtual switch forwarding performance proportion, so that the fairness and isolation of network performance (for example, forwarding performance) among the tenants are ensured.

Optionally, the control module 82 receives the outbound traffic of each tenant in the next statistical period of the current statistical period, and controls the virtual switch to perform the forwarding processing on the outbound traffic of each tenant in the next statistical period of the current statistical period based on the CPU consumption proportion among the tenants in the current statistical period and the virtual switch forwarding performance proportion preconfigured for each tenant in the cloud network service, with the objective that the CPU consumption proportion among the tenants in the next statistical period of the current statistical period being approaching to the virtual switch forwarding performance proportion. The control module 82 includes:
select, according to the CPU consumption proportion among the tenants in the current statistical period and the virtual switch forwarding performance proportion preconfigured for each tenant in the cloud network service, tenants with a CPU consumption proportion lower than the virtual switch forwarding performance proportion as target tenants; and
control the virtual switch to forward only the outbound traffic of the target tenant in the next statistical period of the current statistical period, so that the CPU consumption proportion among the tenants in the next statistical period of the current statistical period being approaching to the virtual switch forwarding performance proportion.

Optionally, the traffic transmission control apparatus based on a cloud network further includes a change module, configured to:
in response to a CPU consumption value corresponding to a tenant in the current statistical period being less than a preconfigured lowest CPU consumption value, updating the lowest CPU consumption value to be equal to the CPU consumption value corresponding to the tenant.

Optionally, the traffic transmission control apparatus based on a cloud network further includes:
an identification module, configured to: when receiving inbound traffic via the virtual switch, identify a home tenant, and determine whether a CPU consumption proportion of a latest statistical period corresponding to the home tenant is higher than a virtual switch forwarding performance proportion preconfigured for the home tenant;
a discarding module, configured to: when the CPU consumption proportion of the latest statistical period is higher than the virtual switch forwarding performance proportion, directly discard the inbound traffic of the home tenant; and
a forwarding module, configured to: when the CPU consumption proportion of the latest statistical period is not higher than the virtual switch forwarding performance proportion, forward the inbound traffic of the home tenant through the virtual switch.

Optionally, the obtaining the central processing unit (CPU) consumption value consumed by each tenant traffic of the cloud network service transmitted via the virtual switch in the current statistical period by the acquisition module 81 includes:
obtain the CPU consumption value consumed by the outbound traffic of each tenant of the cloud network service transmitted via the virtual switch in the current statistical period as outbound CPU consumption value, and obtaining the CPU consumption value consumed by the inbound traffic of each tenant of the cloud network service transmitted via the virtual switch in the current statistical period as an inbound CPU consumption value; and
calculate a sum of the outbound CPU consumption value and the inbound CPU consumption value corresponding to each tenant in the current statistical period respectively as the CPU consumption value corresponding to each tenant in the current statistical period.

Optionally, the CPU consumption value includes a CPU resource consumption or a CPU time consumption.

The specific implementations of operations performed by the respective modules in the traffic transmission control apparatus based on a cloud network according to the embodiments of the present disclosure have been described in detail in the related methods and will not be repeated here.

The present disclosure further provides a computer-readable medium, on which a computer program is stored, and when the computer program is executed by a processing apparatus, the steps of the method according to any one of the present disclosure are implemented.

The present disclosure further provides an electronic device, including:
a storage apparatus, on which a computer program is stored; and
a processing apparatus, configured to execute the computer program in the storage apparatus to implement the steps of the method according to any one of the present disclosure.

The present disclosure further provides a computer program product, including a computer program, and when the computer program is executed by a processor, the steps of the method according to any one of the present disclosure are implemented.

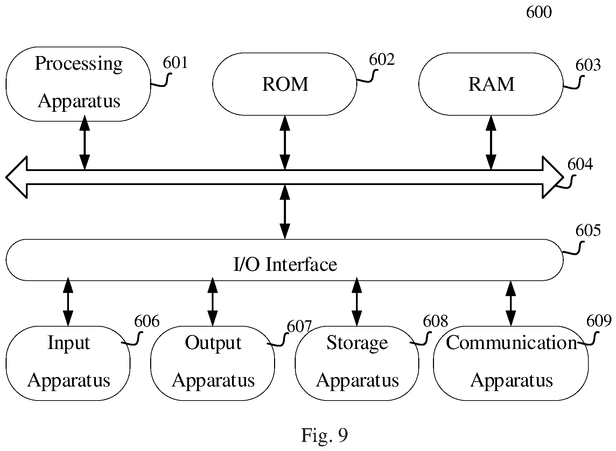

Reference is made to Fig. 9 below, which shows a schematic structural diagram of an electronic device 600 suitable for implementing an embodiment of the present disclosure. The terminal device in the embodiments of the present disclosure may include, but is not limited to, a mobile terminal such as a mobile phone, a notebook computer, a digital broadcast receiver, a personal digital assistant (PDA), a tablet computer, a portable multimedia player (PMP), and a vehicle-mounted terminal (such as a vehicle navigation terminal), and a fixed terminal such as a digital TV and a desktop computer. The electronic device shown in Fig. 9 is only an example, and should not impose any limitation on the functions and the scope of use of the embodiments of the present disclosure.

As shown in Fig. 9, the electronic device 600 may include a processing apparatus (such as a central processing unit and a graphics processor) 601, which may perform various appropriate actions and processing according to a program stored in a read-only memory (ROM) 602 or a program loaded from a storage apparatus 608 into a random access memory (RAM) 603. The RAM 603 further stores various programs and data required for the operation of the electronic device 600. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, a gyroscope, etc.; an output apparatus 607 including, for example, a liquid crystal display (LCD), a speaker, a vibrator, etc.; a storage apparatus 608 including, for example, a magnetic tape, a hard disk, etc.; and a communication apparatus 609. The communication apparatus 609 may allow the electronic device 600 to perform wireless or wired communication with other devices to exchange data. Although Fig. 9 shows the electronic device 600 having various apparatuses, it should be understood that not all the illustrated apparatuses are required to be implemented or provided. More or fewer apparatuses may be implemented or provided alternatively.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, and the computer program includes program codes for executing the method shown in the flowchart. In such an embodiment, the computer program may be downloaded and installed from the network through the communication apparatus 609, or installed from the storage apparatus 608, or installed from the ROM 602. When the computer program is executed by the processing apparatus 601, the above functions defined in the method of the embodiments of the present disclosure are executed.

It should be noted that the above computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, and the program may be used by or in conjunction with an instruction execution system, apparatus, or device. In the present disclosure, the computer-readable signal medium may include a data signal propagated in a baseband or as a part of a carrier, and computer-readable program codes are carried in the data signal. The propagated data signal may take various forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program for use by or in conjunction with an instruction execution system, apparatus, or device. The program codes contained in the computer-readable medium may be transmitted by any suitable medium, including but not limited to a wire, an optical cable, a radio frequency (RF), or any suitable combination thereof.

In some implementations, the client and the server can communicate using any currently known or future developed network protocol such as HTTP (Hypertext transfer protocol), and can be interconnected with any form or medium of digital data communication (such as a communication network). Examples of the communication network include a local area network ("LAN"), a wide area network ("WAN"), an internet (for example, the Internet), and a peer-to-peer network (for example, an ad hoc peer-to-peer network), as well as any currently known or future developed network.

The above computer-readable medium may be included in the above electronic device, or may exist alone without being assembled into the electronic device.

The above computer-readable medium carries one or more programs, and when the one or more programs are executed by the electronic device, the electronic device is caused to: obtain a central processing unit (CPU) consumption value consumed by each tenant traffic of a cloud network service transmitted via a virtual switch in a current statistical period, to obtain a CPU consumption value corresponding to each tenant in the current statistical period, and calculate a CPU consumption proportion among tenants in the current statistical period based on the CPU consumption value corresponding to each tenant in the current statistical period and a CPU consumption value corresponding to each tenant accumulated in a historical statistical period; and receive outbound traffic of each tenant in a next statistical period of the current statistical period, and control the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion.

The computer program codes for performing the operations of the present disclosure can be written in one or more programming languages or a combination thereof. The above programming languages include but are not limited to object-oriented programming languages such as Java, Smalltalk, C++, and also include conventional procedural programming languages such as "C" language or similar programming languages. The program codes can be executed entirely on the user's computer, partly on the user's computer, as a stand-alone software package, partly on the user's computer and partly on a remote computer, or entirely on the remote computer or server. In the scenario involving the remote computer, the remote computer can be connected to the user's computer through any kind of network, including a local area network (LAN) or a wide area network (WAN), or the connection can be made to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur in a different order than the order noted in the drawings. For example, two blocks shown in succession can, in fact, be executed substantially concurrently, or the blocks can sometimes be executed in a reverse order, depending upon the functionality involved. It should also be noted that, each block of the block diagrams and/or flowcharts, and combinations of blocks in the block diagrams and/or flowcharts, can be implemented by special purpose hardware-based systems that perform the specified functions or operations, or combinations of special purpose hardware and computer instructions.

The modules involved in the embodiments of the present disclosure can be implemented in software or hardware. The name of a module does not constitute a limitation of the module per se under certain circumstances. For example, the acquisition module can also be described as "a module for obtaining a central processing unit (CPU) consumption value consumed by each tenant traffic of a cloud network service transmitted via a virtual switch in a current statistical period to obtain a CPU consumption value corresponding to each tenant in the current statistical period, and calculating a CPU consumption proportion among the tenants in the current statistical period based on the CPU consumption value corresponding to each tenant in the current statistical period and a CPU consumption value corresponding to each tenant accumulated in a historical statistical period".

The functions described herein above may be performed, at least partially, by one or more hardware logic components. For example, without limitation, exemplary types of hardware logic components that can be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

According to one or more embodiments of the present disclosure, Example 1 provides a traffic transmission control method based on a cloud network, including:
obtaining a central processing unit CPU consumption value consumed by each tenant traffic of a cloud network service transmitted via a virtual switch in a current statistical period, to obtain a CPU consumption value corresponding to each tenant in the current statistical period, and calculating a CPU consumption proportion among tenants in the current statistical period based on the CPU consumption value corresponding to each tenant in the current statistical period and a CPU consumption value corresponding to each tenant accumulated in a historical statistical period; and
receiving outbound traffic of each tenant in a next statistical period of the current statistical period, and controlling the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion.

According to one or more embodiments of the present disclosure, Example 2 provides the method of Example 1, where receiving the outbound traffic of each tenant in the next statistical period of the current statistical period, and controlling the virtual switch to perform forwarding processing on the outbound traffic of each tenant in the next statistical period of the current statistical period based on the CPU consumption proportion among the tenants in the current statistical period and the virtual switch forwarding performance proportion preconfigured for each tenant in the cloud network service, with the objective that the CPU consumption proportion among the tenants in the next statistical period of the current statistical period being approaching to the virtual switch forwarding performance proportion includes:
selecting, according to the CPU consumption proportion among the tenants in the current statistical period and the virtual switch forwarding performance proportion preconfigured for each tenant in the cloud network service, tenants with a CPU consumption proportion lower than the virtual switch forwarding performance proportion as target tenants; and
controlling the virtual switch to forward only the outbound traffic of the target tenant in the next statistical period of the current statistical period, so that the CPU consumption proportion among the tenants in the next statistical period of the current statistical period being approaching to the virtual switch forwarding performance proportion.

According to one or more embodiments of the present disclosure, Example 3 provides the method of Example 1, where the method further includes:
in response to a CPU consumption value corresponding to a tenant in the current statistical period being less than a preconfigured lowest CPU consumption value, updating the lowest CPU consumption value to be equal to the CPU consumption value corresponding to the tenant.

According to one or more embodiments of the present disclosure, Example 4 provides the method of Example 1, where the method further includes:
when receiving inbound traffic via the virtual switch, identifying home tenant of the inbound traffic, and determining whether a CPU consumption proportion of a latest statistical period corresponding to the home tenant is higher than a virtual switch forwarding performance proportion preconfigured for the home tenant;
when the CPU consumption proportion of the latest statistical period corresponding to the home tenant is higher than the virtual switch forwarding performance proportion, directly discarding the inbound traffic of the home tenant; and
when the CPU consumption proportion of the latest statistical period corresponding to the home tenant is not higher than the virtual switch forwarding performance proportion, forwarding the inbound traffic of the home tenant through the virtual switch.

According to one or more embodiments of the present disclosure, Example 5 provides the method of any one of Examples 1 to 4, where obtaining the CPU consumption value consumed by each tenant traffic of the cloud network service transmitted via the virtual switch in the current statistical period includes:
obtaining the CPU consumption value consumed by the outbound traffic of each tenant of the cloud network service transmitted via the virtual switch in the current statistical period as an outbound CPU consumption value, and obtaining the CPU consumption value consumed by the inbound traffic of each tenant of the cloud network service transmitted via the virtual switch in the current statistical period as an inbound CPU consumption value; and
calculating a sum of the outbound CPU consumption value and the inbound CPU consumption value corresponding to each tenant in the current statistical period respectively as the CPU consumption value corresponding to each tenant in the current statistical period.

According to one or more embodiments of the present disclosure, Example 6 provides the method of any one of Examples 1 to 4, where the CPU consumption value includes a CPU resource consumption or a CPU time consumption.

According to one or more embodiments of the present disclosure, Example 7 provides a traffic transmission control apparatus based on a cloud network, including:
an acquisition module, configured to obtain a central processing unit CPU consumption value consumed by each tenant traffic of a cloud network service transmitted via a virtual switch in a current statistical period, to obtain a CPU consumption value corresponding to each tenant in the current statistical period, and calculate a CPU consumption proportion among tenants in the current statistical period based on the CPU consumption value corresponding to each tenant in the current statistical period and a CPU consumption value corresponding to each tenant accumulated in a historical statistical period; and
a control module, configured to receive outbound traffic of each tenant in a next statistical period of the current statistical period, and control the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion.

According to one or more embodiments of the present disclosure, Example 8 provides a computer-readable medium, on which a computer program is stored, and when the computer program is executed by a processing apparatus, the steps of the method according to any one of Examples 1 to 6 are implemented.

According to one or more embodiments of the present disclosure, Example 9 provides an electronic device, including:
a storage apparatus, on which a computer program is stored;
a processing apparatus, configured to execute the computer program in the storage apparatus to implement the steps of the method according to any one of Examples 1 to 6.

According to one or more embodiments of the present disclosure, Example 10 provides a computer program product, including a computer program, and when the computer program is executed by a processor, the steps of the method according to any one of Examples 1 to 6 are implemented.

The above description is only preferred embodiments of the present disclosure and an illustration of the applied technical principles. Those skilled in the art should understand that the scope of disclosure involved in the present disclosure is not limited to the technical solutions formed by the specific combination of the above technical features and should also cover other technical solutions formed by any combination of the above technical features or equivalent features thereof without departing from the above disclosed concept. For example, a technical solution formed by replacing the above features with the technical features disclosed in the present disclosure (but not limited to) having similar functions.

In addition, although operations are depicted in a particular order, this should not be understood as requiring these operations to be performed in the specific order shown or in a sequential order. Under certain circumstances, multitasking and parallel processing may be advantageous. Likewise, although the above discussion contains several specific implementation details, these should not be construed as limiting the scope of the present disclosure. Certain features that are described in the context of separate embodiments can also be implemented in combination in a single embodiment. Conversely, various features described in the context of a single embodiment can also be implemented in multiple embodiments individually or in any suitable sub-combination.

Although the subject matter has been described in language specific to structural features and/or method logical actions, it should be understood that the subject matter defined in the appended claims is not necessarily limited to the specific features or actions described above. On the contrary, the specific features and actions described above are only exemplary forms of implementing the claims. Regarding the apparatus in the above embodiments, the specific manner in which the modules perform operations has been described in detail in the embodiments related to the method and will not be described in detail here.

## Claims

1. A traffic transmission control method based on a cloud network, comprising:
obtaining a central processing unit CPU consumption value consumed by each tenant traffic of a cloud network service transmitted via a virtual switch in a current statistical period, to obtain a CPU consumption value corresponding to each tenant in the current statistical period, and calculating a CPU consumption proportion among tenants in the current statistical period based on the CPU consumption value corresponding to each tenant in the current statistical period and a CPU consumption value corresponding to each tenant accumulated in a historical statistical period; and
receiving outbound traffic of each tenant in a next statistical period of the current statistical period, and controlling the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion.

2. The method according to claim 1, wherein receiving the outbound traffic of each tenant in the next statistical period of the current statistical period, and controlling the virtual switch to perform forwarding processing on the outbound traffic of each tenant in the next statistical period of the current statistical period based on the CPU consumption proportion among the tenants in the current statistical period and the virtual switch forwarding performance proportion preconfigured for each tenant in the cloud network service, with the objective that the CPU consumption proportion among the tenants in the next statistical period of the current statistical period being approaching to the virtual switch forwarding performance proportion comprises:
selecting, according to the CPU consumption proportion among the tenants in the current statistical period and the virtual switch forwarding performance proportion preconfigured for each tenant in the cloud network service, tenants with a CPU consumption proportion lower than the virtual switch forwarding performance proportion as target tenants; and
controlling the virtual switch to forward only the outbound traffic of the target tenant in the next statistical period of the current statistical period, so that the CPU consumption proportion among the tenants in the next statistical period of the current statistical period being approaching to the virtual switch forwarding performance proportion.

3. The method according to claim 1, further comprising:
in response to a CPU consumption value corresponding to a tenant in the current statistical period being less than a preconfigured lowest CPU consumption value, updating the lowest CPU consumption value to be equal to the CPU consumption value corresponding to the tenant.

4. The method according to claim 1, further comprising:
when receiving inbound traffic via the virtual switch, identifying home tenant of the inbound traffic, and determining whether a CPU consumption proportion of a latest statistical period corresponding to the home tenant is higher than a virtual switch forwarding performance proportion preconfigured for the home tenant;
when the CPU consumption proportion of the latest statistical period corresponding to the home tenant is higher than the virtual switch forwarding performance proportion, directly discarding the inbound traffic of the home tenant; and
when the CPU consumption proportion of the latest statistical period corresponding to the home tenant is not higher than the virtual switch forwarding performance proportion, forwarding the inbound traffic of the home tenant through the virtual switch.

5. The method according to any one of claims 1 to 4, wherein obtaining the CPU consumption value consumed by each tenant traffic of the cloud network service transmitted via the virtual switch in the current statistical period comprises:
obtaining the CPU consumption value consumed by the outbound traffic of each tenant of the cloud network service transmitted via the virtual switch in the current statistical period as an outbound CPU consumption value, and obtaining the CPU consumption value consumed by the inbound traffic of each tenant of the cloud network service transmitted via the virtual switch in the current statistical period as an inbound CPU consumption value; and
calculating a sum of the outbound CPU consumption value and the inbound CPU consumption value corresponding to each tenant in the current statistical period respectively as the CPU consumption value corresponding to each tenant in the current statistical period.

6. The method according to any one of claims 1 to 4, wherein the CPU consumption value comprises a CPU resource consumption or a CPU time consumption.

7. A traffic transmission control apparatus based on a cloud network, comprising:
an acquisition module, configured to obtain a central processing unit CPU consumption value consumed by each tenant traffic of a cloud network service transmitted via a virtual switch in a current statistical period, to obtain a CPU consumption value corresponding to each tenant in the current statistical period, and calculate a CPU consumption proportion among tenants in the current statistical period based on the CPU consumption value corresponding to each tenant in the current statistical period and a CPU consumption value corresponding to each tenant accumulated in a historical statistical period; and
a control module, configured to receive an outbound traffic of each tenant in a next statistical period of the current statistical period, and control the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period is close to the virtual switch forwarding performance proportion.

8. An electronic device, comprising:
at least a processor, and
a non-transitory memory with instructions thereon,
wherein the instructions upon execution by the processor, cause the processor to:
obtain a central processing unit CPU consumption value consumed by each tenant traffic of a cloud network service transmitted via a virtual switch in a current statistical period, to obtain a CPU consumption value corresponding to each tenant in the current statistical period, and calculate a CPU consumption proportion among tenants in the current statistical period based on the CPU consumption value corresponding to each tenant in the current statistical period and a CPU consumption value corresponding to each tenant accumulated in a historical statistical period; and
receive outbound traffic of each tenant in a next statistical period of the current statistical period, and control the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion.

9. The electronic device according to claim 7, wherein when receiving the outbound traffic of each tenant in the next statistical period of the current statistical period, and controlling the virtual switch to perform forwarding processing on the outbound traffic of each tenant in the next statistical period of the current statistical period based on the CPU consumption proportion among the tenants in the current statistical period and the virtual switch forwarding performance proportion preconfigured for each tenant in the cloud network service, with the objective that the CPU consumption proportion among the tenants in the next statistical period of the current statistical period being approaching to the virtual switch forwarding performance proportion, the processor is further caused to:
select, according to the CPU consumption proportion among the tenants in the current statistical period and the virtual switch forwarding performance proportion preconfigured for each tenant in the cloud network service, tenants with a CPU consumption proportion lower than the virtual switch forwarding performance proportion as target tenants; and
control the virtual switch to forward only the outbound traffic of the target tenant in the next statistical period of the current statistical period, so that the CPU consumption proportion among the tenants in the next statistical period of the current statistical period being approaching to the virtual switch forwarding performance proportion.

10. The electronic device according to claim 7, wherein the processor is further caused to:
in response to a CPU consumption value corresponding to a tenant in the current statistical period being less than a preconfigured lowest CPU consumption value, update the lowest CPU consumption value to be equal to the CPU consumption value corresponding to the tenant.

11. The electronic device according to claim 7, wherein the processor is further caused to:
when receiving inbound traffic via the virtual switch, identify a home tenant, and determining whether a CPU consumption proportion of a latest statistical period corresponding to the home tenant is higher than a virtual switch forwarding performance proportion preconfigured for the home tenant;
when the CPU consumption proportion of the latest statistical period is higher than the virtual switch forwarding performance proportion, directly discard the inbound traffic of the home tenant; and
when the CPU consumption proportion of the latest statistical period is not higher than the virtual switch forwarding performance proportion, forward the inbound traffic of the home tenant through the virtual switch.

12. A non-transitory computer-readable storage medium instructions that cause at least a processor to:
obtain a central processing unit CPU consumption value consumed by each tenant traffic of a cloud network service transmitted via a virtual switch in a current statistical period, to obtain a CPU consumption value corresponding to each tenant in the current statistical period, and calculate a CPU consumption proportion among tenants in the current statistical period based on the CPU consumption value corresponding to each tenant in the current statistical period and a CPU consumption value corresponding to each tenant accumulated in a historical statistical period; and
receive outbound traffic of each tenant in a next statistical period of the current statistical period, and control the virtual switch to perform forwarding processing on the outbound traffic of each tenant in the next statistical period of the current statistical period based on the CPU consumption proportion among the tenants in the current statistical period and a virtual switch forwarding performance proportion preconfigured for each tenant in the cloud network service, with an objective that the CPU consumption proportion among the tenants in the next statistical period of the current statistical period being approaching to the virtual switch forwarding performance proportion.

13. The non-transitory computer-readable storage medium according to claim 12, wherein when receiving the outbound traffic of each tenant in the next statistical period of the current statistical period, and controlling the virtual switch to perform forwarding processing on the outbound traffic of each tenant in the next statistical period of the current statistical period based on the CPU consumption proportion among the tenants in the current statistical period and the virtual switch forwarding performance proportion preconfigured for each tenant in the cloud network service, with the objective that the CPU consumption proportion among the tenants in the next statistical period of the current statistical period being approaching to the virtual switch forwarding performance proportion, the processor is further caused to:
select, according to the CPU consumption proportion among the tenants in the current statistical period and the virtual switch forwarding performance proportion preconfigured for each tenant in the cloud network service, tenants with a CPU consumption proportion lower than the virtual switch forwarding performance proportion as target tenants; and
control the virtual switch to forward only the outbound traffic of the target tenant in the next statistical period of the current statistical period, so that the CPU consumption proportion among the tenants in the next statistical period of the current statistical period being approaching to the virtual switch forwarding performance proportion.

14. The non-transitory computer-readable storage medium according to claim 12, wherein the processor is further caused to:
in response to a CPU consumption value corresponding to a tenant in the current statistical period being less than a preconfigured lowest CPU consumption value, update the lowest CPU consumption value to be equal to the CPU consumption value corresponding to the tenant.

15. The non-transitory computer-readable storage medium according to claim 12, wherein the processor is further caused to:
when receiving inbound traffic via the virtual switch, identifying home tenant of the inbound traffic, and
determine whether a CPU consumption proportion of a latest statistical period corresponding to the home tenant is higher than a virtual switch forwarding performance proportion preconfigured for the home tenant;
when the CPU consumption proportion of the latest statistical period corresponding to the home tenant is higher than the virtual switch forwarding performance proportion, directly discard the inbound traffic of the home tenant; and
when the CPU consumption proportion of the latest statistical period corresponding to the home tenant is not higher than the virtual switch forwarding performance proportion, forward the inbound traffic of the home tenant through the virtual switch.
